# EUROPEAN PATENT SPECIFICATION

(11) **EP 0 585 929 B1**
(45) Date of publication and mention of the grant of the patent: **14.05.1997**
(21) Application number: 93114086.7
(22) Date of filing: 02.09.1993
(51) Int. Cl.: C08F 8/14, C08L 101/00

(54) **Agent for improving molding processability and antistatic property of thermoplastic resins and thermoplastic resin composition comprising the agent**
Mittel zur Verbesserung der Formverarbeitbarkeit und antistatischen Eigenschaft von thermoplastischen Harzen und diese Mittel enthaltende thermoplastische Harzzusammensetzung
Agent pour améliorer l'usinabilité de moulage et les propriétés antistatiques de résines thermoplastiques et composition de résine thermoplastique contenant cet agent

(30) Priority: 03.09.1992 JP 235516/92; 03.09.1992 JP 235517/92
(43) Date of publication of application: 09.03.1994
(73) Proprietor: SUMITOMO CHEMICAL COMPANY LIMITED, Osaka-shi, Osaka 541 (JP)
(72) Inventor: Ohmae, Tadayuki, Toyonaka-shi (JP); Hara, Sumio, Sodegaura-shi (JP); Fujiki, Tohru, Sodegaura-shi (JP)
(74) Representative: VOSSIUS & PARTNER

(56) References cited:
- FR-A- 1 239 634
- US-A- 2 941 988
- US-A- 3 106 543
- US-A- 4 104 453
- PATENT ABSTRACTS OF JAPAN vol. 5, no. 28 (C-44)(700) 20 February 1981 & JP-A-55 155 026 (TAKEDA YAKUHIN KOGYO K.K.) 3 December 1980
- PATENT ABSTRACTS OF JAPAN vol. 5, no. 28 (C-44)(700) 20 February 1981 & JP-A-55 155 026

## Description

The present invention relates to an agent for improving the molding processability and the antistatic property of thermoplastic resins and a thermoplastic resin composition using the agent. More particularly, the present invention relates to an agent for improving the molding processability and the antistatic property of thermoplastic resins to be good in molding processability including typically flowability and mold release property and in antistatic property as well as to be excellent in thermal durability and mechanical properties, and also relates to a thermoplastic resin composition comprising the improving agent.

### Description of the Related Art

Thermoplastic resins have been used in a wide variety of applications for their excellent characteristics. Recently, there is an increasing need for resins having a more excellent molding processability than that of the conventional thermoplastic resins, as thermoplastic resins have been required to be molded more complicatedly, more precisely and higher technically. For example, the thermoplastic resins to be used in injection molding are required to be improved in molding processability including flowability, mold release property, and the like. Thus, there is a need to enhance the molding processability of not only the existing popular resins but also the specific thermoplastic resins adaptable to both engineering plastics and super-engineering plastics.

Moreover, thermoplastic resins have encountered many difficulties attributable to electrostatic phenomena because they are generally apt to be charged owing to their highly insulative electrical property.

In order to cope with these problems, there have been generally employed the following processes for improving the molding processability: (1) a process comprising controlling the structures of thermoplastic resins themselves by varying their molecular weights or modifying various properties, and (2) a process comprising adding oils, waxes, paraffins and low molecular weight compounds as flowability improvers or mold release agents to the thermoplastic resins. For example, Japanese Patent KOKOKU (Post-Exam. Publication) No. 43-17812 discloses blending polyphenylene ether resins with impact resistant polystyrenes; Japanese Patent KOKOKU (Post-Exam. Publication) No. 49-5220 discloses the improvement in molding processability by blending polyphenylene ether resins with any one of compounds selected from the group consisting of esters of aromatic organic acids, polyesters having aromatic groups, esters of aromatic organoacids having aromatic groups and chlorinated aromatic hydrocarbons as plasticizers; and Japanese Patent KOKOKU (Post-Exam. Publication) No. 4-33819 discloses the improvement in flowability by adding diamido-N,N'-diphenyl adipic acid to modified polyphenylene ether resins.

As measures for preventing thermoplastic resins from electrostatically charging, techniques of kneading hygroscopic compounds such as polalkylene oxides as antistatic agents into thermoplastic resins, or of coating surfactants on the surfaces of shaped thermoplastic resins have been generally employed. For example, Japanese Patent KOKAI (Laid-open) No. 2-233743 discloses a process of adding polyethylene oxides and sulfonates to styrenic polymers and Japanese Patent KOKAI (Laid-open) No. 3-26756 discloses a process of blending a polyamidoimide elastomer containing polyoxyethylene glycol and a compound selected from organic electrolytes and inorganic electrolytes with styrene based polymers and polyolefins.

However, the process (1) caused a problem that the unique characteristics of thermoplastic resins themselves are diminished owing to the modification in the structures of the resins. The process (2) had various problems that the addition of the required materials resulted in a great reduction in thermal durability and mechanical properties of the thermoplastic resins, or bleeding of the added flowability improvers onto the surfaces of the resins, and so on.

Prior techniques of rendering thermoplastic resins antistatic cause the problems of phenomena that antistatic agents bleed out of the surfaces of the resins to produce sticky surfaces, and that the thermal stability and the mechanical properties of the resins are reduced owing to the antistatic agents kneaded thereinto as well as the problems of a great reduction in antistatic ability due to wiping and washing of the surfaces and dissipation of the antistatic agents themselves.
The European application EP-A-0 580 103 which is a document in the sense of Art. 54(3) EPC relates to a graft polymer produced by graft-copolymerizing an alkylene oxide and a cyclic ester to a saponified ethylene-saturated carboxylic acid vinyl ester copolymer.

It is an object of the present invention to provide an agent for improving the molding processability and the antistatic property of thermoplastic resins, which does not cause the problems of the reduction in thermal durability and mechanical properties of thermoplastic resins and the bleeding of flowability improving agents onto the surfaces of the resins. For the contracting states DE, FR, GB, IT and NL it is an object of the present invention to provide the use of this agent.

It is another object of the present invention to provide a thermoplastic resin composition, characterized by comprising the above agent for improving the molding processability and the antistatic property of thermoplastic resins.

This object has been solved by the finding that kneading an adduct of an alkylene oxide with a saponificated product of a copolymer of ethylene and a vinyl ester of saturated carboxylic acid into thermoplastic resins can produce an antistatic thermoplastic resin composition which is good in molding processability, including typically flowability and mold release property, and excellent in thermal durability and mechanical properties.

The present invention provides an agent for improving the processability and the antistatic property comprising as effective component an adduct of an alkylene oxide with a saponificated product of a copolymer of ethylene and a vinyl ester of saturated carboxylic acid.

Furthermore, the present invention provides a thermoplastic resin composition comprising (A) 100 parts by weight of a thermoplastic resin excluding the component (B) as described below and the starting materials therefor, and (B) 0.1 to 30 parts by weight of an adduct of an alkylene oxide with a saponificated product of a copolymer of ethylene and a vinyl ester of saturated carboxylic acid.

Thus, the present invention is characterized by using an adduct of an alkylene oxide with a saponificated product of a copolymer of ethylene and a vinyl ester of saturated carboxylic acid as an effective component for improving the molding processability and the antistatic property which can be kneaded into thermoplastic resins.

Thermoplastic resins to be used in the present invention include various thermoplastic resins, for example, various polyolefins such as typically polyethylenes and polypropylenes, excluding ethylene copolymers, and resin compositions therewith; polyvinyl chloride, polyvinylidene chloride, polystyrenes, polymethylmethacrylates, and resin compositions therewith; styrene-acrylonitrile copolymer (SAN), acrylonitrile-butadiene-styrene copolymer (ABS), polyacetal (POM), polyurethanes, and resin compositions therewith; polyamide based resins such as typically polyamide (PA), PA/polyolefins, PA/ABS, and resin compositions therewith; polyphenylene ether based resins such as typically polyphenylene ether (PPE), PPE/impact resistant polystyrene, PPE/PA, and PPE/polybutylene terephthalate, and resin compositions therewith; polyphenylene sulfide based resins such as typically polyphenylene sulfide (PPS), PPS/PPE, and PPS/polyketone sulfides, and resin compositions therewith; polycarbonate based resins such as typically polycarbonate (PC), PC/ABS, PC/polybutylene terephthalates, and PC/polyethylene terephthalates, and resin compositions therewith; saturated polyester resins such as typically polyethylene terephthalate (PET), polybutylene terephthalates, and poly 1,4-cyclohexane dimethylene terephthalates, and resin compositions therewith; typical PBT/ABS resins and resin compositions therewith; copolymeric polyester resins, ethylene-vinyl alcohol copolymers, polymethyl pentene (PMP), liquid crystal polymer (LCP), polyarylate (PAR), polyether sulfone (PES), polyetherimides (PEI), polyether ketone (PEK), polyetherether ketone (PEEK), polyimides, polyamidoimides (PAI), polythioether sulfone (PTES), polysulfone (PSF) and polyaryl sulfone (PASF).

The thermoplastic resins to be used in the present invention do not include the component (B), i.e. an adduct of an alkylene oxide with a saponificated product of a copolymer of ethylene and a vinyl ester of saturated carboxylic acid and the starting materials thereof, i.e., copolymers of ethylene and a vinyl ester of a saturated carboxylic acid and a saponificated product of a copolymer of ethylene and a vinyl ester of a saturated carboxylic acid.

The thermoplastic resins to be used in the present invention should be preferably, inter alia, polypropylenes, polyvinyl chloride, polystyrenes, polymethylmethacrylates, acrylonitrile-butadiene-styrene copolymers, polyphenylene sulfides, polyphenylene ethers, polycarbonates, saturated polyester resins, and polyamides which may be used alone or in a mixture of two or more thereof.

The thermoplastic resins to be used in the present invention should have a relatively higher rigidity in view of the application thereof as injection molding materials, for example, preferably a flexural elasticity modulus not less than 600 kg/cm².

The thermoplastic resins having a flexural elasticity modulus not less than 600 kg/cm² include polypropylenes, polyvinyl chloride, polystyrenes, polymethylmethacrylates, acrylonitrile-butadiene-styrene copolymers, polyphenylene sulfides, polyphenylene ethers, polycarbonates, saturated polyester resins, and polyamides.

The copolymer of ethylene and a vinyl ester of a saturated carboxylic acid for the adduct of an alkylene oxide with a saponificated product of a copolymer of ethylene and a vinyl ester of saturated carboxylic acid to be used in the present invention may be produced by any one of known methods, for example, by radical polymerization under high pressure.

The vinyl ester of saturated carboxylic acid as starting material is not critical and a wide variety thereof may be employed including practically vinyl acetate, vinyl propionate, and vinyl butyrate with vinyl acetate being preferred among them.

Copolymerization of ethylene and vinyl ester of saturated carboxylic acid may be performed in the presence of an alkyl ester of unsaturated carboxylic acid, for example, methyl acrylate, methyl methacrylate to effect multi-component polymerization.

The copolymers of ethylene and a vinyl ester of saturated carboxylic acid are not critical in ethylene content and number average molecular weight, but generally have an ethylene content in the range of 1 to 90 % by weight, preferably 40 to 80 % by weight and a number average molecular weight in the range of 1,000 to 20,000, preferably 1,000 to 10,000.

The rate of saponification of the saponificated product of a copolymer of ethylene and a vinyl ester of saturated carboxylic acid is not critical, but generally in the range of 30 to 100 %, preferably 50 to 100 %.

The adduct of an alkylene oxide with a saponificated product of a copolymer of ethylene and a vinyl ester of saturated carboxylic acid (referred to simply as "adduct" hereunder) can be obtained by adding an alkylene oxide to a saponificated product of a copolymer of ethylene and a vinyl ester of saturated carboxylic acid.

The adducts to be used in the present invention are not critical with respect to the process of production thereof, but may be produced, for example, by first saponifying partially or completely a binery heterogeneous mixture of a copolymer of ethylene and a vinyl ester of saturated carboxylic acid and an aliphatic alcohol in the presence of an alkali catalyst with by-product alkyl esters of saturated carboxylic acid being removed from the reaction system, and then removing the remaining aliphatic alcohols, followed by adding an alkylene oxide, if necessary, in the presence of an additional alkali catalyst [Japanese Patent KOKAI (Laid-open) No. 3-227307].

The alkylene oxide is not critical, but a wide variety thereof may be used. Practical alkylene oxides to be used include ethylene oxide, propylene oxide or butylene oxide. Among them, ethylene oxide is preferred. The alkylene oxides may be used alone or in the form of block or random adduct of two or more thereof.

The amount of alkylene oxides to be added to the saponificated product of a copolymer of ethylene and a vinyl ester of saturated carboxylic acid is also not critical, but generally in the range of 20 to 1000 parts by weight, preferably 50 to 500 parts by weight based on 100 parts by weight of the saponificated product.

The amount of the adduct to be added according to the present invention is in the range of 0.1 to 30 parts by weight, preferably 1 to 15 parts by weight based on 100 parts by weight of the thermoplastic resin. An amount of the adduct added less than 0.1 parts by weight is unsuitable because there may result insufficient effects to improve the molding processability as well as insufficient antistatic property. An amount of the adduct over 30 parts by weight is practically undesirable because the resin composition produces soft products and the resulting mechanical strength is deficient.

The production of the thermoplastic resin compositions having an excellent molding processability and a good antistatic property by adding the adduct to thermoplastic resins according to the present invention may be accomplished by any one of feasible processes, for example, by a process comprising mixing a thermoplastic resin and the adduct at a temperature of not lower than the melting point of the resin with a generic mixer such as banbury mixer, open rollers, kneader, or a single or twin screw extruder, as one may make mention of. Alternatively, a process comprising predispersing the adduct in a thermoplastic resin composition e.g. by means of a tumbler or Henschel mixer and then melt-blending identically to the aforementioned process may be employed to effect the addition.

In order to further improve controlled electric properties of the thermoplastic resin composition of the present invention, antistatic agents, high molecular weight electrolytes, electroconductive polymers such as typically inorganic alkali salts, anionic, cationic and nonionic surfactants may be added.

The thermoplastic resin composition of the present invention may contain thermal stabilisers, antioxitants, photo-stabilisers, slipping agents, anti-fogging agents, pigments, foaming agents, fluorescent substances, flame retardants, mold release agents, processing aids or reinforcing agents which are generally added to thermoplastic resins, if necessary.

As described in detail above, the present invention can provide an agent for improving the molding processability and the antistatic property of thermoplastic resins. It provides a good molding processability including typically flowability and mold release property and an antistatic property as well as an excellent thermal durability and mechanical properties, and a thermoplastic resin composition using the improving agent.

The present invention will be described practically with reference to Examples and Comparative Examples without being limited thereto.

### Example 1

An adduct to be used in the present invention was prepared in the following procedure:

### (1) Preparation of ethylene-vinyl acetate copolymer

Ethylene and vinyl acetate were copolymerized in the presence of tert-butylperoxy-2-ethylhexanoate as a polymerization initiator and propane as a molecular weight controlling agent, in an autoclave reactor under a pressure of 1400 kg/cm² at a temperature of 190 °C to produce an ethylene-vinyl acetate copolymer having a content of vinyl acetate of 31 % by weight, a number average molecular weight of 1800 and a softening point of 30 °C (referred to as EVA hereunder).

### (2) Production of an adduct of an alkylene oxide with a saponificated ethylene-vinyl acetate copolymer

Into a 700 L stainless steel autoclave equipped with a stirrer, an outlet and a feed line, 160 kg of the EVA produced in the above step, 320 kg of methyl alcohol and 0.96 kg of sodium hydroxide were charged and reacted by heating at a temperature of 65 °C for 2 hours with stirring while maintaining the outlet line open. Thereafter, the temperature inside the system was raised to 142 °C over one hour to remove all the volatiles out of the system.

Subsequently 0.27 kg of potassium hydroxide was added and the temperature inside the system was raised to 180 °C, followed by introducing ethylene oxide to a pressure of 2 kg/cm². After confirming a reduction in pressure owing to the addition reaction with the ethylene oxide, additional ethylene oxide was intermittently fed to maintain the pressure at 2 kg/cm², achieving a total charge of 272 kg ethylene oxide over one hour. When the pressure was reduced to 0.4 kg/cm², the temperature was lowered to 100 °C and the product was removed to yield 408 kg of an adduct of an alkylene oxide with saponificated ethylene-vinyl acetate copolymer, i.e., an agent for improving the molding processability and the antistatic property of thermoplastic resins (referred to simply as "adduct" hereunder). It had a melting point of 51 °C and a hydroxyl value of 110 mg KOH/g.

Analysis for alkali metals revealed that the adduct contained 1200 ppm of sodium and 300 ppm of potassium.

### Examples 2 and 3, and Comparative Example 1

### Addition of the adduct to styrene polymers

The adduct obtained in Example 1 and a styrene based polymer (SUMIBRITE M540, available from SUMITOMO CHEMICAL) incorporated in the ratios as shown in Table 1 were melt-kneaded and extruded with a twin 30 mmφ screw extruder having vents at a cylinder temperature of 200 °C to produce particles. Then the particles were molded with an injection molding machine under conditions of a cylinder temperature of 200 °C and a metal mold temperature of 60 °C to produce specimens which were evaluated for various physical properties and surface resistivity. The results are set forth in Table 1.

### Examples 4 and 5, and Comparative Example 2

### Addition of the adduct to ABS resins

The adduct obtained in Example 1 and an acrylonitrile/butadiene/styrene copolymer (referred to as ABS resin hereunder) (CRALASTIC MH, available from SUMITOMO-DOW) incorporated in the ratios as shown in Table 2 were melt-kneaded and extruded with a twin 30 mmφ screw extruder having vents at a cylinder temperature of 200 °C to produce particles. Then the particles were molded with an injection molding machine under conditions of a cylinder temperature of 200 °C and a metal mold temperature of 60 °C to produce specimens which were evaluated for various physical properties and surface resistivity. The results are set forth in Table 2.

### Examples 6 to 8, and Comparative Example 3

### Addition of the adduct to polyphenylene ether/styrene based polymer

The adduct obtained in Example 1 and a polyphenylene ether (referred to as PPE hereunder) (PPE H46, available from NIPPON POLYETHER) and a styrene based polymer (500 HRY3, available from NIPPON POLYSTYRENE) incorporated in the ratios as shown in Table 3 were melt-kneaded and extruded with a twin 30 mmφ screw extruder having vents at a cylinder temperature of 260 °C to produce particles. Then the particles were molded with an injection molding machine under conditions of a cylinder temperature of 270 °C and a metal mold temperature of 90 °C to produce specimens which were evaluated for various physical properties and surface resistivity. The results are set forth in Table 3.

### Examples 9 to 11, and Comparative Example 4

### Addition of the adduct to polybutylene terephthalate

The adduct obtained in Example 1 and a polybutylene terephthalate (referred to as PBT hereunder) (1401X06, available from TOREY) incorporated in the ratios as shown in Table 4 were melt-kneaded and extruded with a twin 30 mmφ screw extruder having vents at a cylinder temperature of 250 °C to produce particles. Then the particles were molded with an injection molding machine under conditions of a cylinder temperature of 260 °C and a metal mold temperature of 70 °C to produce specimens which were evaluated for various physical properties and surface resistivity. The results are set forth in Table 4.

### Evaluation of physical properties

The specimens were evaluated for physical properties after they had been produced and conditioned by leaving to stand at a temperature of 23 °C and a humidity of 50 % for one day.
① MFR
   Measurements were conducted according to JIS K-7210 (Examples 2 and 3 and Comparative Example 1).
   Measurements were conducted according to ASTM D1238 (Examples 4 to 11 and Comparative Examples 2 to 4).
② Izod impact test
   Measurements were carried out according to ASTM D256.
③ Load bending temperature
   Measurements were conducted according to JIS K-7207 (Examples 2 and 3 and Comparative Example 1).
   Measurements were conducted according to ASTM D648 (Examples 4 to 11 and Comparative Examples 2 to 4).
④ Surface resistivity
   Flat sheets having a thickness of 3 mm were formed, then conditioned by leaving to stand at a temperature of 23 °C and a humidity of 50 % for one day, and thereafter evaluated for surface resistivity with Super-insulation meter, Model SM-10E available from TOA DENPA KOGYO (Examples 2 to 5 and Comparative Examples 1 and 2).
   Flat sheets having a thickness of 3 mm were formed, then conditioned by leaving to stand at a temperature of 23 °C and a humidity of 50 % for one day, and thereafter evaluated for surface resistivity with Super-insulation meter, Model SM-8210 available from TOA DENPA KOGYO (Examples 6 to 11 and Comparative Examples 3 and 4).
⑤ Mold release property
   Visual evaluation was conducted based on the following criteria:
   - Ⓞ: Excellent
   - ○: Good
   - Δ: Poor
⑥ Length of spiral flow
   Measurements were made with an injection molding machine, Model IS100EN-3A available from TOSHIBA KIKAI and a metal mold having an ellipse spiral slot of a thickness of 2 mm under conditions of a die temperature of 230 °C, a metal mold temperature of 50 °C, an injection pressure of 1500 kg/cm², (Examples 4 and 5 and Comparative Example 2).
   Measurements were made in the same manner as in Example 4, except that a metal mold having an ellipse spiral slot of a thickness of 3mm was employed and the die temperature was 270 °C and the metal mold temperature was 70 °C, (Examples 6 to 8 and Comparative Example 3).
   Measurements were made in the same manner as in Example 4, except that the die temperature was 240 °C and the metal mold temperature was 70 °C, (Examples 9 to 11 and Comparative Example 4).

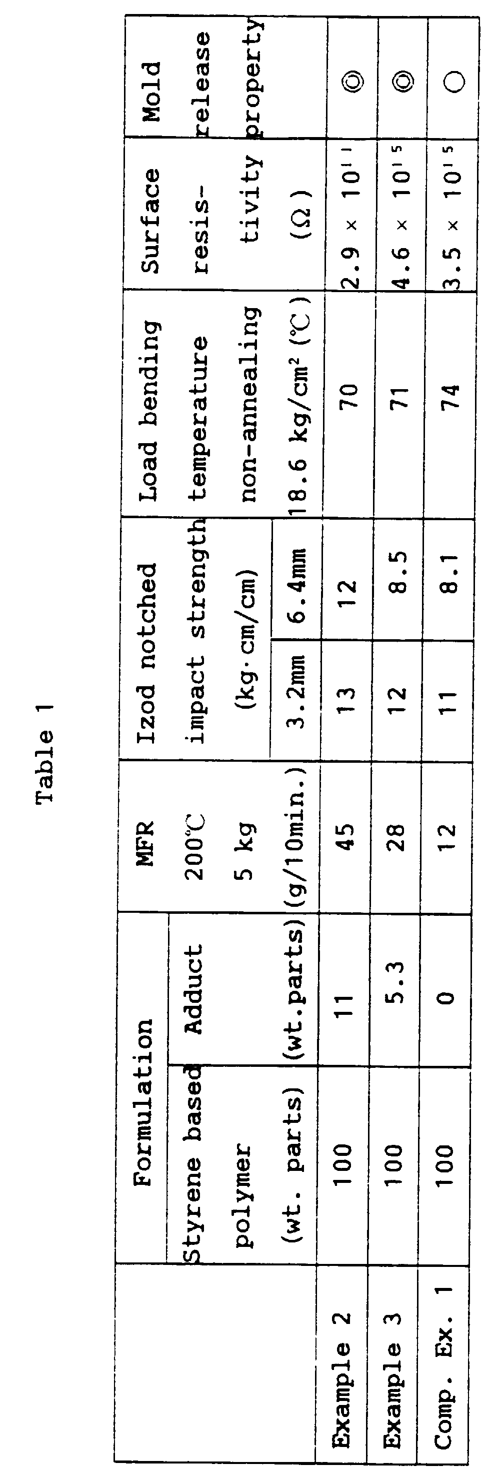

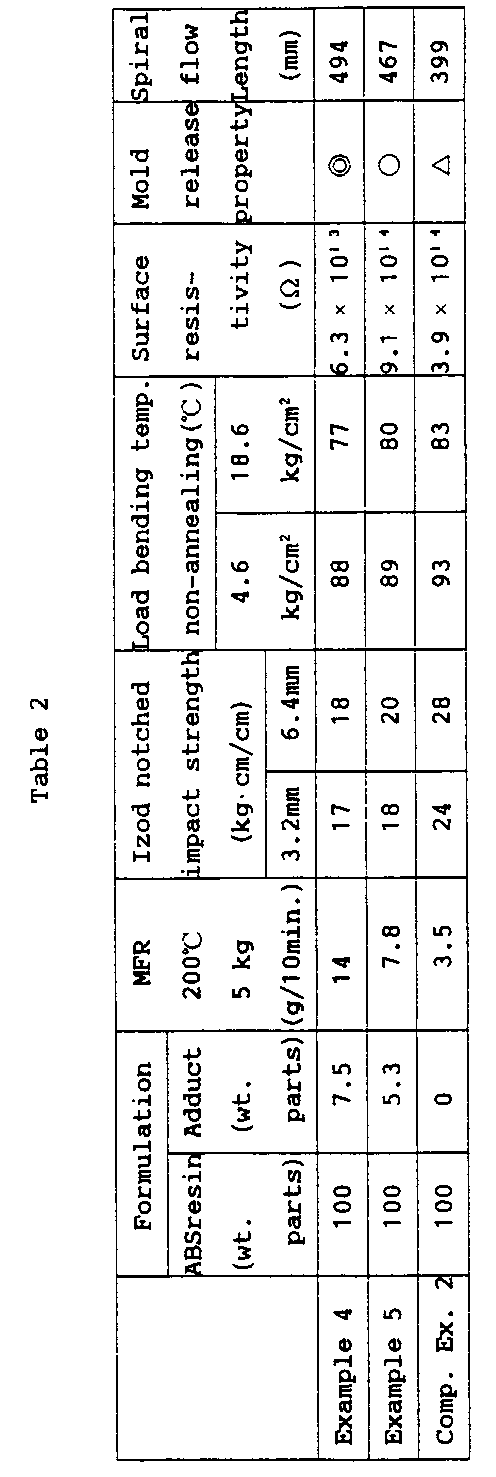

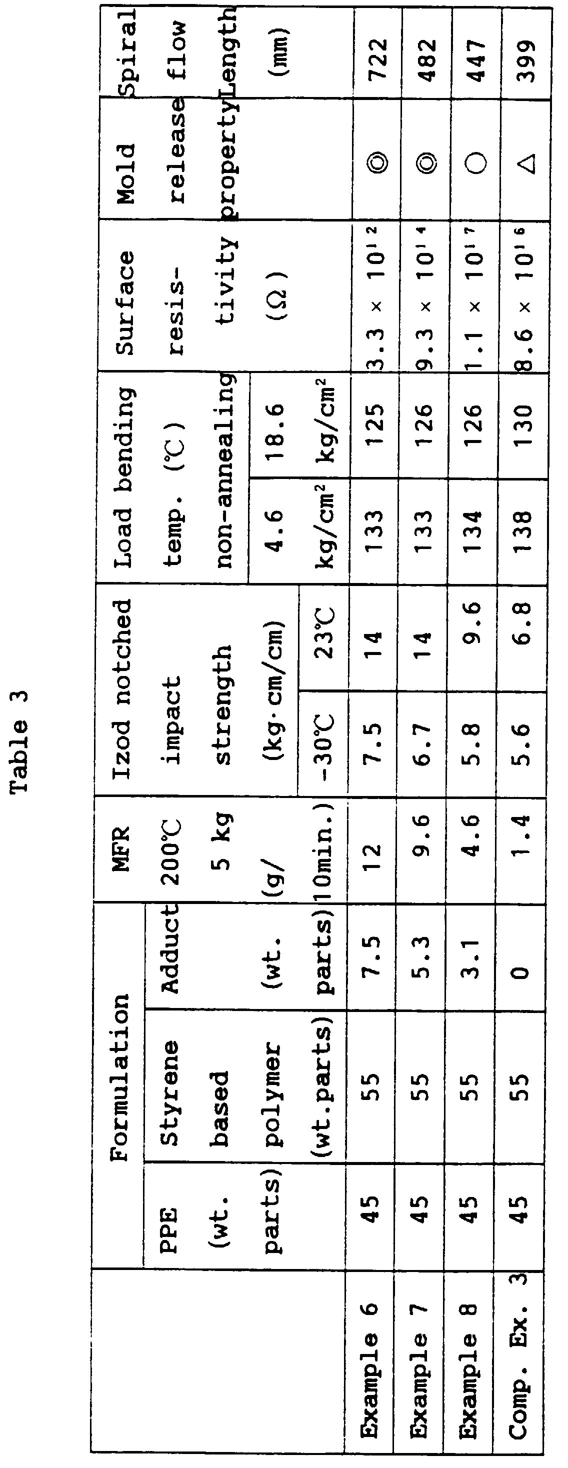

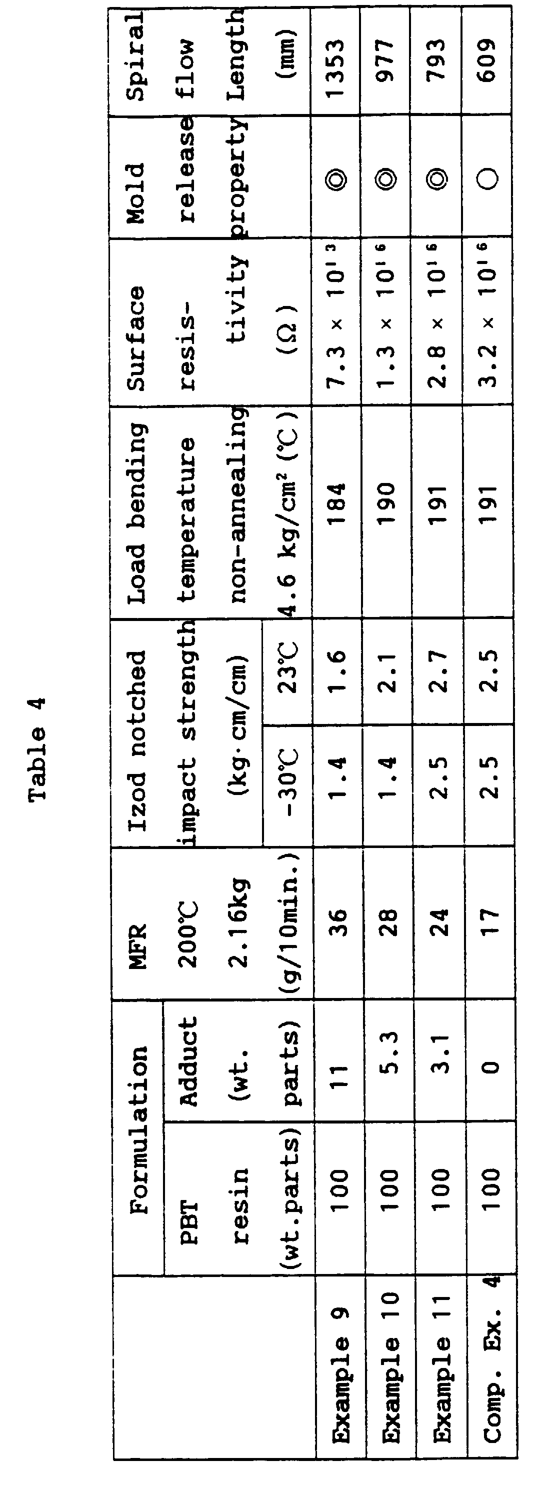

## Claims (Claims for the following Contracting State(s): DE, FR, GB, IT, NL)

1. Use of an adduct of an alkylene oxide with a saponificated product of a copolymer of ethylene and a vinyl ester of a saturated carboxylic acid as an agent for improving the molding processability and the antistatic property of thermoplastic resins.

2. Use according to claim 1, wherein said copolymer of ethylene and a vinyl ester of a saturated carboxylic acid is an ethylene-vinyl acetate copolymer.

3. Use according to claim 1 or 2, wherein said copolymer of ethylene and a vinyl ester of saturated carboxylic acid has an ethylene content of 1 to 90 % by weight and a number average molecular weight of 1000 to 20000.

4. Use according to any one of claims 1 to 3, wherein said saponificated product of a copolymer of ethylene and a vinyl ester of saturated carboxylic acid has a rate of saponification of 30 to 100 %.

5. Use according to any one of claims 1 to 4, wherein the amount of alkylene oxide added is 20 to 1000 parts by weight based on 100 parts by weight of said saponificated product of ethylene and a vinyl ester of saturated carboxylic acid.

6. Use according to any one of claims 1 to 5, wherein the alkylene oxide is at least one selected from the group consisting of ethylene oxide, propylene oxide and butylene oxide.

7. A thermoplastic resin composition comprising (A) 100 parts by weight of a thermoplastic resin, excluding the following component (B) and the starting materials therefor, and (B) 0.1 to 30 parts by weight of an adduct of an alkylene oxide with a saponificated product of a copolymer of ethylene and a vinyl ester of a saturated carboxylic acid.

8. The thermoplastic resin composition according to Claim 7, wherein said (A) thermoplastic resin is selected from the group consisting of the following (1) to (10):
(1) polypropylenes,
(2) polyvinyl chloride,
(3) polystyrenes,
(4) polymethylmethacrylates,
(5) acrylonitrile-butadiene-styrene copolymer,
(6) polyphenylene sulfides,
(7) polyphenylene ethers,
(8) polycarbonates,
(9) saturated polyester resins, and
(10) polyamides.

## Claims (Claims for the following Contracting State(s): BE)

1. An agent for improving the molding processability and the antistatic property of thermoplastic resins comprising as effective component an adduct of an alkylene oxide with a saponificated product of a copolymer of ethylene and a vinyl ester of a saturated carboxylic acid.

2. The agent for improving the molding processability and the antistatic property of thermoplastic resins according to Claim 1, wherein said copolymer of ethylene and a vinyl ester of a saturated carboxylic acid is an ethylene-vinyl acetate copolymer.

3. The agent for improving the molding processability and the antistatic property of thermoplastic resins according to Claim 1 or 2, wherein said copolymer of ethylene and a vinyl ester of saturated carboxylic acid has an ethylene content of 1 to 90 % by weight and a number average molecular weight of 1000 to 20000.

4. The agent for improving the molding processability and the antistatic property of thermoplastic resins according to any one of Claims 1 to 3,wherein said saponificated product of a copolymer of ethylene and a vinyl ester of saturated carboxylic acid has a rate of saponification of 30 to 100 %.

5. The agent for improving the molding processability and the antistatic property of thermoplastic resins according to any one of Claims 1 to 4, wherein the amount of alkylene oxide added is 20 to 1000 parts by weight based on 100 parts by weight of said saponificated product of a copolymer of ethylene and a vinyl ester of saturated carboxylic acid.

6. The agent for improving the molding processability and the antistatic property of thermoplastic resins according to any one of Claims 1 to 5, wherein the alkylene oxide is at least one selected from the group consisting of ethylene oxide, propylene oxide and butylene oxide.

7. A thermoplastic resin composition comprising (A) 100 parts by weight of a thermoplastic resin, excluding the following component (B) and the starting materials therefor, and (B) 0.1 to 30 parts by weight of an adduct of an alkylene oxide with a saponificated product of a copolymer of ethylene and a vinyl ester of a saturated carboxylic acid.

8. The thermoplastic resin composition according to Claim 7, wherein said (A) thermoplastic resin is selected from the group consisting of the following (1) to (10):
(1) polypropylenes,
(2) polyvinyl chloride,
(3) polystyrenes,
(4) polymethylmethacrylates,
(5) acrylonitrile-butadiene-styrene copolymer,
(6) polyphenylene sulfides,
(7) polyphenylene ethers,
(8) polycarbonates,
(9) saturated polyester resins, and
(10) polyamides.

## Patentansprüche (Patentansprüche für folgende(n) Vertragsstaat(en): DE, FR, GB, IT, NL)

1. Verwendung eines Addukts eines Alkylenoxids mit einem verseiften Produkt eines Copolymers von Ethylen und eines Vinylesters einer gesättigten Carbonsäure als ein Mittel zur Verbesserung der Formverarbeitbarkeit und der antistatischen Eigenschaft von thermoplastischen Harzen.

2. Verwendung nach Anspruch 1, wobei das Copolymer von Ethylen und eines Vinylesters einer gesättigten Carbonsäure ein Ethylen-Vinylacetat-Copolymer ist.

3. Verwendung nach Anspruch 1 oder 2, wobei das Copolymer von Ethylen und eines Vinylesters einer gesättigten Carbonsäure einen Ethylengehalt von 1 bis 90 Gew.-% und ein zahlengemitteltes Molekulargewicht von 1.000 bis 20.000 hat.

4. Verwendung nach einem der Ansprüche 1 bis 3, wobei das verseifte Produkt eines Copolymers von Ethylen und eines Vinylesters einer gesättigten Carbonsäure einen Verseifungsgrad von 30 bis 100% hat.

5. Verwendung nach einem der Ansprüche 1 bis 4, wobei die Menge an zugegebenem Alkylenoxid 20 bis 1.000 Gewichtsteile beträgt, bezogen auf 100 Gewichtsteile des verseiften Produkts von Ethylen und eines Vinylesters einer gesättigten Carbonsäure.

6. Verwendung nach einem der Ansprüche 1 bis 5, wobei das Alkylenoxid wenigstens eines ist, ausgewählt aus Ethylenoxid, Propylenoxid und Butylenoxid.

7. Thermoplastische Harzzusammensetzung, umfassend
(A) 100 Gewichtsteile eines thermoplastischen Harzes, ausschließlich des folgenden Bestandteils (B) und der Ausgangsmaterialien dafür, und
(B) 0,1 bis 30 Gewichtsteile eines Addukts eines Alkylenoxids mit einem verseiften Produkt eines Copolymers von Ethylen und eines Vinylesters einer gesättigten Carbonsäure.

8. Thermoplastische Harzzusammensetzung nach Anspruch 7, wobei das thermoplastische Harz (A) aus den folgenden Verbindungen (1) bis (10) ausgewählt wird:
(1) Polypropylene,
(2) Polyvinylchlorid,
(3) Polystyrole,
(4) Polymethylmethacrylate,
(5) Acrylnitril-Butadien-Styrol-Copolymer,
(6) Polyphenylensulfide,
(7) Polyphenylenether,
(8) Polycarbonate,
(9) gesättigte Polyesterharze und
(10) Polyamide.

## Patentansprüche (Patentansprüche für folgende(n) Vertragsstaat(en): BE)

1. Mittel zur Verbesserung der Formverarbeitbarkeit und der antistatischen Eigenschaft von thermoplastischen Harzen, umfassend als wirksamen Bestandteil ein Addukt eines Alkylenoxids mit einem verseiften Produkt eines Copolymers von Ethylen und eines Vinylesters einer gesättigten Carbonsäure.

2. Mittel zur Verbesserung der Formverarbeitbarkeit und der antistatischen Eigenschaft von thermoplastischen Harzen nach Anspruch 1, wobei das Copolymer von Ethylen und eines Vinylesters einer gesättigten Carbonsäure ein Ethylen-Vinylacetat-Copolymer ist.

3. Mittel zur Verbesserung der Formverarbeitbarkeit und der antistatischen Eigenschaft von thermoplastischen Harzen nach Anspruch 1 oder 2, wobei das Copolymer von Ethylen und eines Vinylesters einer gesättigten Carbonsäure einen Ethylengehalt von 1 bis 90 Gew.-% und ein zahlengemitteltes Molekulargewicht von 1.000 bis 20.000 hat.

4. Mittel zur Verbesserung der Formverarbeitbarkeit und der antistatischen Eigenschaft von thermoplastischen Harzen nach einem der Ansprüche 1 bis 3, wobei das verseifte Produkt eines Copolymers von Ethylen und eines Vinylesters einer gesättigten Carbonsäure einen Verseifungsgrad von 30 bis 100% hat.

5. Mittel zur Verbesserung der Formverarbeitbarkeit und der antistatischen Eigenschaft von thermoplastischen Harzen nach einem der Ansprüche 1 bis 4, wobei die Menge an zugegebenem Alkylenoxid 20 bis 1.000 Gewichtsteile beträgt, bezogen auf 100 Gewichtsteile des verseiften Produkts eines Copolymers von Ethylen und eines Vinylesters einer gesättigten Carbonsäure.

6. Mittel zur Verbesserung der Formverarbeitbarkeit und der antistatischen Eigenschaft von thermoplastischen Harzen nach einem der Ansprüche 1 bis 5, wobei das Alkylenoxid wenigstens eines ist, ausgewählt aus Ethylenoxid, Propylenoxid und Butylenoxid.

7. Thermoplastische Harzzusammensetzung, umfassend
(A) 100 Gewichtsteile eines thermoplastischen Harzes, ausschließlich des folgenden Bestandteils (B) und der Ausgangsmaterialien dafür, und
(B) 0,1 bis 30 Gewichtsteile eines Addukts eines Alkylenoxids mit einem verseiften Produkt eines Copolymers von Ethylen und eines Vinylesters einer gesättigten Carbonsäure.

8. Thermoplastische Harzzusammensetzung nach Anspruch 7, wobei das thermoplastische Harz (A) aus den folgenden Verbindungen (1) bis (10) ausgewählt wird:
(1) Polypropylene,
(2) Polyvinylchlorid,
(3) Polystyrole,
(4) Polymethylmethacrylate,
(5) Acrylnitril-Butadien-Styrol-Copolymer,
(6) Polyphenylensulfide,
(7) Polyphenylenether,
(8) Polycarbonate,
(9) gesättigte Polyesterharze und
(10) Polyamide.

## Revendications (Revendications pour l'(les) Etat(s) contractant(s) suivant(s): DE, FR, GB, IT, NL)

1. Utilisation d'un produit d'addition d'un oxyde d'alkylène et d'un produit saponifé d'un copolymère d'éthylène et d'un ester vinylique d'un acide carboxylique saturé comme agent destiné à améliorer l'aptitude au moulage et la propriété antistatique de résines thermoplastiques.

2. Utilisation selon la revendication 1, dans laquelle ledit copolymère d'éthylène et d'un ester vinylique d'un acide carboxylique saturé est un copolymère éthylène/acétate de vinyle.

3. Utilisation selon la revendication 1 ou 2, dans laquelle ledit copolymère d'éthylène et d'un ester vinylique d'acide carboxylique saturé a une teneur en éthylène de 1 à 90% en poids et un poids moléculaire moyen en nombre de 1000 à 20 000.

4. Utilisation selon l'une quelconque des revendications 1 à 3, dans laquelle ledit produit saponifié d'un copolymère d'éthylène et d'un ester vinylique d'acide carboxylique saturé a un taux de saponification de 30 à 100%

5. Utilisation selon l'une quelconque des revendications 1 à 4, dans laquelle la quantité d'oxyde d'alkylène ajoutée est de 20 à 1000 parties en poids pour 100 parties en poids dudit produit saponifié d'éthylène et d'un ester vinylique d'acide carboxylique saturé.

6. Utilisation selon l'une quelconque des revendications 1 à 5, dans laquelle l'oxyde d'alkylène est au moins un composé choisi dans le groupe constitué par l'oxyde d'éthylène, l'oxyde de propylène et l'oxyde de butylène.

7. Composition de résine thermoplastique comprenant: (A) 100 parties en poids d'une résine thermoplastique, à l'exclusion du composant (B) suivant et des substances de départ pour celui-ci; et (B) 0,1 à 30 parties en poids d'un produit d'addition d'un oxyde d'alkylène et d'un produit saponifié d'un copolymère d'éthylène et d'un ester vinylique d'un acide carboxylique saturé.

8. Composition de résine thermoplastique selon la revendication 7, dans laquelle ladite résine thermoplastique (A) est choisie dans le groupe constitué par les résines (1) à (10) suivantes:
(1) polypropylènes,
(2) poly(chlorure de vinyle),
(3) polystyrènes,
(4) polyméthacrylates de méthyle
(5) copolymère acrylonitrile/butadiène/styrène,
(6) polysulfures de phénylène,
(7) poly(phénylène éthers)
(8) polycarbonates,
(9) résines de polyester saturées et
(10) polyamides.

## Revendications (Revendications pour l'(les) Etat(s) contractant(s) suivant(s): BE)

1. Agent destiné à améliorer l'aptitude au moulage et la propriété antistatique de résines thermoplastiques, comprenant, en tant que composant actif, un produit d'addition d'un oxyde d'alkylène et d'un produit saponifié d'un copolymère d'éthylène et d'un ester vinylique d'un acide carboxylique saturé.

2. Agent destiné à améliorer l'aptitude au moulage et la propriété antistatique de résines thermoplastiques selon la revendication 1, dans lequel ledit copolymère d'éthylène et d'un ester vinylique d'un acide carboxylique saturé est un copolymère éthylène/acétate de vinyle.

3. Agent destiné à améliorer l'aptitude au moulage et la propriété antistatique de résines thermoplastiques selon la revendication 1 ou 2, dans lequel ledit copolymère d'éthylène et d'un ester vinylique d'acide carboxylique saturé a une teneur en éthylène de 1 à 90% en poids et un poids moléculaire moyen en nombre de 1000 à 20 000.

4. Agent destiné à améliorer l'aptitude au moulage et la propriété antistatique de résines thermoplastiques selon l'une quelconque des revendications 1 à 3, dans lequel ledit produit saponifié d'un copolymère d'éthylène et d'un ester vinylique d'acide carboxylique saturé a un taux de saponification de 30 à 100%

5. Agent destiné à améliorer l'aptitude au moulage et la propriété antistatique de résines thermoplastiques selon l'une quelconque des revendications 1 à 4, dans lequel la quantité d'oxyde d'alkylène ajoutée est de 20 à 1000 parties en poids pour 100 parties en poids dudit produit saponifié d'un copclymère d'éthylène et d'un ester vinylique d'acide carboxylique saturé.

6. Agent destiné à améliorer l'aptitude au moulage et la propriété antistatique de résines thermoplastiques selon l'une quelconque des revendications 1 à 5, dans lequel l'oxyde d'alkylène est au moins un composé choisi dans le groupe constitué par l'oxyde d'éthylène, l'oxyde de propylène et l'oxyde de butylène.

7. Composition de résine thermoplastique comprenant: (A) 100 parties en poids d'une résine thermoplastique, à l'exclusion du composant (B) suivant et des substances de départ pour celui-ci; et (B) 0,1 à 30 parties en poids d'un produit d'addition d'un oxyde d'alkylène et d'un produit saponifié d'un copolymère d'éthylène et d'un ester vinylique d'un acide carboxylique saturé.

8. Composition de résine thermoplastique selon la revendication 7, dans laquelle ladite résine thermoplastique (A) est choisie dans le groupe constitué par les résines (1) à (10) suivantes:
(1) polypropylènes,
(2) poly(chlorure de vinyle),
(3) polystyrènes,
(4) polyméthacrylates de méthyle
(5) copolymère acrylonitrile/butadiène/styrène,
(6) polysulfures de phénylène,
(7) poly(phénylène éthers)
(8) polycarbonates,
(9) résines de polyester saturées et
(10) polyamides.
